# EUROPÄISCHE PATENTSCHRIFT

(11) **EP 0 585 260 B1**
(45) Veröffentlichungstag und Bekanntmachung des Hinweises auf die Patenterteilung: **09.08.1995**
(21) Anmeldenummer: 92909403.5
(22) Anmeldetag: 29.04.1992
(51) Int. Cl.: C10M 175/00, B01J 19/24

(54) **VERFAHREN UND VORRICHTUNG ZUM AUFARBEITEN SCHÄDLICHE BESTANDTEILE ENTHALTENDER FLIESSFÄHIGER ORGANISCHER ABFALLSTOFFE**
PROCESS AND DEVICE FOR PROCESSING FREE-FLOWING ORGANIC WASTE MATERIALS CONTAINING NOXIOUS SUBSTANCES
PROCEDE ET DISPOSITIF DE TRAITEMENT DE DECHETS ORGANIQUES COULANTS CONTENANT DES MATIERES NOCIVES

(30) Priorität: 07.05.1991 DE 4114883
(43) Veröffentlichungstag der Anmeldung: 09.03.1994
(73) Patentinhaber: Schön, Christian O., D-77855 Achern (DE)
(72) Erfinder: Schön, Christian O., D-77855 Achern (DE)
(86) Internationale Anmeldenummer: EP9200933
(87) Internationale Veröffentlichungsnummer: WO9219705

(56) Entgegenhaltungen:
- EP-A- 0 267 654
- WO-A-89/12482

## Beschreibung

Die Erfindung betrifft ein Verfahren und eine Vorrichtung zum Aufarbeiten schädliche und umweltbelastende Bestandteile enthaltender fließfähiger organischer Abfallstoffe, z.B. Altöle, vorzugsweise chlorhaltige, unter Verwendung eines durch eine Fördereinrichtung beschickbaren mehrstufigen Einrohrreaktors, in welchem durch das Rohr ein Energieaustausch, insbesondere thermischer Energie, mit dem Abfallstoff erfolgt, wobei der Abfallstoff wenigstens teilweise in eine gasförmige Phase überführt wird und der Energiefluß und die Zeit, während welcher jedes Molekül des Abfallstoffes diesem Energiefluß ausgesetzt ist, derart geregelt ist, daß sich die für die Abtrennung der schädlichen bzw. umweltbelastenden Bestandteile erforderliche Aktivierungsenergie für eine Bindungslösung zwischen den jeweiligen Molekülen oder Atomen der Bestandteile und den wieder verwertbaren Stoffen einstellt, wobei in jeder Stufe die für das jeweilige Produkt erforderliche und vorher experimentell ermittelte und gegebenenfalls geänderte Aktivierungsenergie durch eine in der jeweiligen Stufe geregelte Energieeinwirkung jeweils von neuem eingestellt wird.

Unter fließfähigen organischen Abfallstoffen seien hier flüssige Abfallstoffe schlechthin verstanden, die zusammen mit unerwünschten giftigen oder umweltschädlichen Bestandteilen wiederverwertbare Rohstoffe enthalten. Im Falle von Altöl beispielsweise soll eine Wiederverwendung des Öles als Neuöl ermöglicht werden, d.h. ohne die z.B. aus Verbrennungsmotoren stammenden im Altöl enthaltenen Verunreinigungen. Ebenso sind chlor- und schwefelhal tige Kohlenwasserstoffverbindungen, sowie auch Sumpfprodukte, die als Destillationsrückstände bei bekannten Aufbereitungsverfahren anfallen und weiter aufbereitet werden sollen, gemeint.

Bei der Aufbereitung derartiger Medien fallen äußerst schädliche und umweltfeindliche Stoffe an, wie z.B. Chlor, Dioxine, polychlorierte Biphenyle (PCB), polyaromatische Hydrocarbone (PAH) oder dgl., aber auch mineralischen Ölprodukten beigegebene Additive, wie Mangan, Wolfram, Eisen oder Stabilisatoren usw., die alle sehr schwer und oft überhaupt nicht von den aufzubereitenden Stoffen getrennt werden können. Andere Abfallstoffe enthalten im wesentlichen nur derartige giftige Stoffe, die aber für eine problemlose Entsorgung nicht voneinander getrennt, d.h. in die einzelnen Bestandteile zerlegt werden können, die dann für sich leichter zu entsorgen wären oder ggf. in andere Produkte verwandelt werden könnten. Es werden deshalb immer noch viele hunderttausend Tonnen derartiger Stoffe pro Jahr im Meer verklappt. Es ist zu erwarten, daß bei dem geplanten zukünftig erhöhten Einsatz von vegetabilen Ölen im praktischen Bettrieb Vermischungen von mineralischen mit vegetabilen Altölen auftreten, deren Trennung und Aufbereitung für eine Wiederverwertung bisher technisch nicht möglich ist.

Es ist nun vom gleichen Erfinder wie dem der vorliegenden Anmeldung schon vorgeschlagen worden, solche Stoffe gemäß dem in der Beschreibungseinleitung genannten Verfahren aufzubereiten. Ein solches Verfahren ist z.B. aus den deutschen Patentanmeldungen P 38 20 317.0-45 und P 38 41 844.4 bekannt. Mit diesem Verfahren ist es aufgrund der Verwendung eines Einrohrreaktors bereits möglich, eine umweltfreundliche Entsorgung derartiger giftiger und schädlicher Substanzen vorzunehmen. Durch einen solchen Einrohrreaktor kann nämlich das Produkt mit einer außerordentlichen Produkthomogenität über den ganzen Rohrquerschnitt auf Zehntel Grade C genau und durch Regeln der Strömungsgeschwindigkeit bei gegebener Rohrlänge auf eine Verweilzeit des Produktes bei einer bestimmten Temperatur auf Millisekunden genau gesteuert werden. Unter Verweilzeit ist dabei die Zeit zu verstehen, während welcher das Produkt beim Durchströmen des Reaktors einer bestimmten Einflußgröße, also insbesondere einer bestimmten Temperatur oder Energie ausgesetzt ist.

Der Einrohrreaktor ermöglicht es also, daß jedes Teilchen bis herunter zum Molekül absolut gleichen einstellbaren Einflußgrößen ausgesetzt werden kann, wodurch gezielt auf die Moleküle bzw. Atome des Produktes eingewirkt werden kann.

Der vorliegenden Erfindung liegt nun die Aufgabe zugrunde, dieses an sich schon recht gute Verfahren noch weiter zu verbessern, es bezüglich seiner Anwendungsmöglichkeiten zu erweitern und insbesondere es noch wirtschaftlicher zu gestalten. Ferner soll auch die Trennung von zwei wertvollen Stoffkomponenten in zwei Einzelkomponenten ermöglicht werden, wie z.B. Gemische aus mineralischem und vegetabilen Altölen.

Die Erfindung löst das Problem dadurch, daß nach jeder Stufe die in dieser Stufe abgetrennten Schadstoffanteile in einen Sumpf abgeschieden werden. Vorzugsweise wird nach der letzten Stufe das gewünschte Produkt wenigstens teilweise kondensiert. Die Kondensation kann entweder als Gesamt- oder als Teilkondensation oder auch als fraktionierende Kondensation durchgeführt werden. Zur Überwindung der Druckverluste im Gesamtsystem sind erforderliche Fördereinrichtungen (Pumpen, Turbogebläse etc.) vorgesehen.

Es besteht also durchaus die Möglichkeit, daß z.B. in der zweiten Stufe die Aktivierungsenergie niedriger als in der ersten Stufe ist und entsprechend Energie geregelt aus dieser Stufe, z.B. durch Kühlung, abgeführt wird. Entscheidend ist, daß in jeder Stufe die Energie so eingestellt wird, daß man eine optimale Reaktion erhält. Optimal ist diejenige Reaktion, die Kundenwünsche erfüllt bzw. die eine optimale Entsorgung gewährleistet. Sie kann qualitativ sein, z.B. bei Altöl, wenn die Schadstoffe entfernt werden und die Schmiereigenschaften gut sind. Es ist sogar möglich, die Qualität des Produktes, z.B. den Raffinations grad bei Altöl, entweder durch den prozentualen Anteil des Natriums oder durch Veränderung der Aktivierungsenergie oder der Verweilzeit zu beeinflussen. Quantitativ ist sie optimal, wenn z.B. im Falle von PCBs (polychlorierten Biphenylen) diese bis unter den behördlich vorgeschriebenen zulässigen Wert beseitigt werden.

Um dies zu erreichen kann es auch vorteilhaft sein, das in eine gasförmige Phase überführte Produkt wenigstens einmal am Beginn einer folgenden Stufe wieder zu kondensieren und es anschließend wieder zu vergasen, wobei dann zweckmäßigerweise zwischen der Kondensationszone und der Vergasungszone über einen Flüssigkeitsabscheider eine Vakuumpumpe angeschlossen ist. Dabei ist zweckmäßigerweise innerhalb einer Stufe zwischen zwei Abscheidern für die Schadstoffanteile die Energiezuführung für sich in einzelnen Sektionen geregelt, d.h. beispielsweise eine Sektion für die Kondensation, eine für die anschließende Überführung wieder in die gasförmige Phase und evtl. eine weitere für eine Reaktion bei Eindosierung von Hilfschemikalien. Diese Hilfschemikalien können in einzelnen Stufen abhängig vorn Produkt und entsprechend den Prozeßanforderungen oder den Entsorgungsanforderungen längs des Reaktors eindosiert werden. Die Hilfschemikalien erfüllen verschiedene Funktionen, die auch von den Temperaturen abhängig sind, bei welchen sich das strömende Produkt befindet.

Im übrigen können bei der vorliegenden Erfindung die gleichen Energieformen zur Veränderung der Aktivierungsenergie Verwendung finden, wie sie in den oben erwähnten Schutzrechten des gleichen Erfinders erwähnt sind, wie z.B. Umspülung der Rohre durch ein flüssiges oder gasförmiges Heiz- oder Kühlmedium oder auch durch Elementarteilchenbeschuß durch energiereiche Elektronen-, Protonen- oder Neutronenstrahlung im Megaradbereich, Hochspannung in der Größenordnung von 10 000 bis 100 000 Volt, Ionenimplantation durch geeignete Ionisation, d.h. elektromagnetische Schwingungserregung über dem Megahertzbereich, vorzugsweise im Gigahertzbereich, usw.

Die Regelung der Energieeinwirkung in jeder Stufe kann in bekannter Weise dadurch erfolgen, daß die Temperatur am Ende der Stufe gemessen und damit die zu- oder abzuführende Energie geregelt wird. Insbesondere dann, wenn wenigstens zwei parallele Rohrreaktoren vorgesehen sind, ist es erfindungsgemäß von besonderem Vorteil, wenn die Regelung der Energieeinwirkung bei konstantem Energiefluß durch Regelung der Strömungsgeschwindigkeit in jeder Rohrstufe, d.h. durch Beeinflussung der Einwirkungsdauer dieses Energieflusses auf das strömende Produkt, erfolgt. Der konstante Energiefluß kann durch eine zentral geregelte Energiequelle erzeugt werden. Es werden dadurch unvermeidbare Ungenauigkeiten in den Rohrdurchmessern oder unterschiedliche Beschaffenheiten der Rohrinnenflächen im Hinblick auf die bei dem erfindungsgemäßen Verfahren erforderlichen großen Genauigkeiten der Steuerung des Energieflusses auf das strömende Produkt kompensiert.

In weiterer Ausbildung der Erfindung ist ferner die Möglichkeit vorgesehen, daß in einer Stufe, vorzugsweise der zweiten Stufe, ein Hydriervorgang eingeleitet wird.

Eine Vorrichtung zur Durchführung des erfindungsgemäßen Verfahrens mit mehreren hintereinander angeordneten Stufen bei denen das Rohr jeder Stufe ein Verhältnis Länge zu Durchmesser von wenigstens 200 : 1 (z.B. Länge 1000 cm, Durchmesser 5 cm) bei einem Mindestdurchmesser von 10 mm hat und Regeleinrichtungen zum Regeln der Strömungsgeschwindigkeit und der Temperatur jeder Stufe vorgesehen sind, ist durch einen Reaktor gekennzeichnet, bei dem nach jeder Stufe ein Abscheider zum Abscheiden der abgetrennten schädlichen Stoffe in einen Sumpf angeordnet ist. Bei einer Länge von 100 m kann der Rohrdurchmesser beispielsweise 0,5 m oder kleiner sein, es kann aber auch bei einer Länge von 700 m ein Durchmesser von 0,5 m vorgesehen sein.

Auch können die Durchmesser über die Länge unterschiedlich sein.

Nach der letzten Stufe ist vorzugsweise eine Kondensiervorrichtung, z.B. für eine fraktionierende Kondensation, angeordnet. Die Rohre der einzelnen Stufen können als Doppelwandrohre ausgebildet sein, die durch ein Heiz- bzw. Kühlmedium beaufschlagbar sind, oder die Rohre können von einem Heizraum umgeben sein, in welchem z.B. durch einen Brenner erwärmte Rauchgase die Rohre umspülen und erwärmen.

Im Falle der Anwendung der oben erwähnten energiereichen Elektronen-, Protonen- oder Neutronenstrahlung oder elektromagnetischer Schwingungen im Gigahertzbereich bis zu Nano-m Wellenlänge, z.B. UV-Licht, usw., bestehen die dem Stand der Technik entsprechenden Möglichkeiten, diese in den Reaktorraum einzuleiten, wie z.B. im Falle von hochfrequenten Feldern die Anordnung von Quarzfenstern in der Rohrwandung, durch welche Magnetspulen auf das strömende Medium wirken. Es wird auch hier auf die anfangs erwähnten älteren Schutzrechte verwiesen.

Im Abscheider können Vorrichtungen montiert sein, wie z.B. Hochspannungsaufladungen oder Prallbleche, wie diese in der Gastechnik zum Abscheiden von Stäuben und Verschmutzungen bekannt sind. Das gleiche gilt auch für Einbauten, welche der Agglomeration von Aerosolen dienen.

Da es in bestimmten Fällen erwünscht sein kann, das Produkt in wenigstens einer Stufe wieder in eine flüssige Phase überzuführen, ist an dieser Stelle zweckmäßigerweise ein Zwischenkondensator angeordnet, durch welchen das gasförmige Produkt wieder verflüssigt werden kann, um dann in einer folgenden Sektion dieser Stufe wieder in gasförmige Phase überführt zu werden.

In Ausnahmefällen kann auch von vornherein das Produkt gasförmig, evtl. mit Verunreinigungen, eingespeist werden, wie auch das gereinigte Produkt gasförmig oder teilweise gasförmig aus dem Reaktor zur Weiterverarbeitung austreten kann.

Die Erfindung ist im folgenden an Hand von Beispielen in der Zeichnung näher erläutert. Darin zeigen
- Fig. 1: im Schema eine Vorrichtung nach der Erfindung mit einem dreistufigen Rohrreaktor,
- Fig. 2: im Schema eine Vorrichtung nach der Erfindung mit zwei parallelen dreistufigen Rohrreaktoren,
- Fig. 3: im Schema eine vierstufige Vorrichtung nach der Erfindung mit jeweils als Doppelrohr ausgebildeten Reaktorstufen.
- Fig. 4: im Schema eine Alternativausbildung des erfindungsgemäßen Rohrreaktors,
- Fig. 5: einen Ausschnitt aus Fig. 4 mit einer Alternativausbildung dieses Abaschnittes und
- Fig. 6: im Schema eine weitere, besonders zum Hydrieren geeignete Ausbildung des Reaktors.

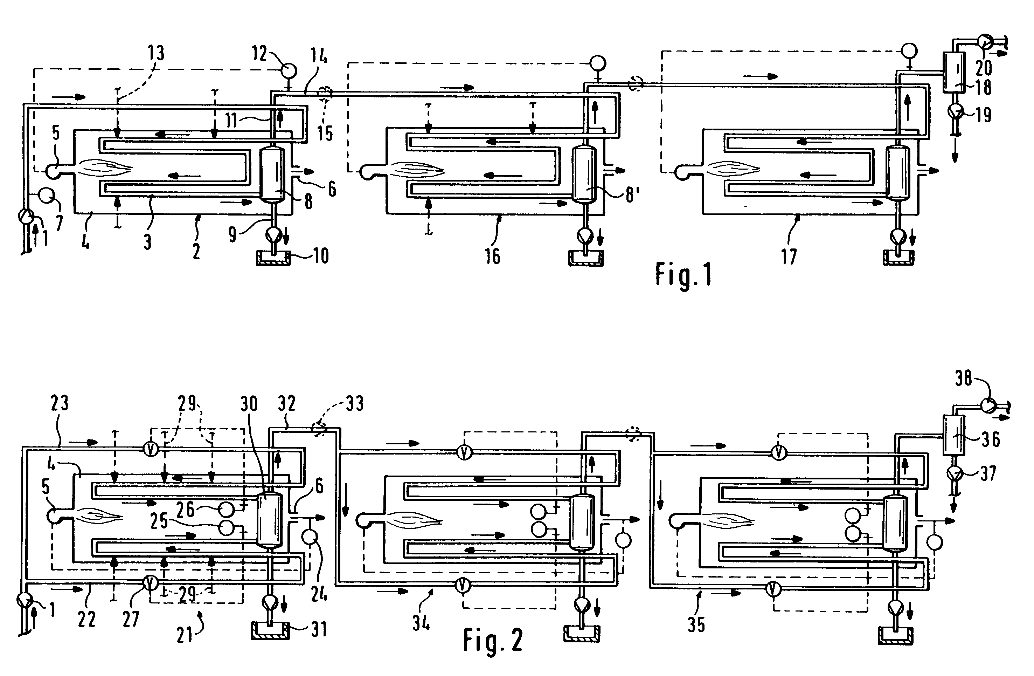

In dem Beispiel nach Fig. 1 wird das aufzubereitende Produkt, z.B. ein Altöl, mittels einer Förderpumpe 1 in die erste Stufe 2 des Rohrreaktors 3 gefördert, der durch eine Heizkammer 4 geführt ist. Die Heizkammer 4 wird durch einen Brenner 5 erwärmt, wobei die Rauchgase bei 6 aus der Kammer 4 austreten. Die Durchflußmenge des Produktes in dem Rohrreaktor 3 wird konstant über einen Regler 7 geregelt. Am Ende der ersten Stufe 2 des Rohrreaktors ist ein Abscheider 8 für in dieser Stufe abgeschiedene Sumpfprodukte angeordnet. die bei 9 in den Sumpf 10 austreten, während das in der ersten Stufe in eine gasförmige Phase verwandelte Produkt bei 11 aus dem Abscheider 8 austritt. An dieser Stelle wird die Temperatur des Produktes bei 12 gemessen und für eine Regelung des Brenners auf konstante Temperatur an die Brennersteuerung rückgeführt. Wie durch gestrichelt dargestellte Pfeile 13 dargestellt, können an diesen Stellen evtl. Hilfschemikalien eindosiert werden. Das aus dem Abscheider 8 ausgetretene Produkt wird über die Rohrleitung 14 in die zweite Stufe 16 des des Rohrreaktors geleitet. Zur Unterstützung der Förderung kann eine Fördereinrichtung 15 vorgesehen werden. Die zweite Stufe 16 und dritte Stufe 17 sind bezüglich Heizung und Abscheidung mit der ersten Stufe identisch, mit dem Unterschied, daß in dem dargestellten Beispiel in der dritten Stufe keine Einrichtung zum Eindosieren von Hilfschemikalien vorgesehen ist. Das fertig aufbereitete Produkt wird nach der dritten Stufe über einen Kondensator 18 und Abziehpumpe 19 entnommen. Der Kondensator 18 kann beispielsweise für eine fraktionierende Kondensation ausgebildet sein, wie es in den oben erwähnten Schutzrechten desselben Erfinders dargestellt ist. Eine Vakuumpumpe 20 sorgt für den erforderlichen Unterdruck im System.

Das Ausführungsbeispiel nach Fig.2 zeigt eine Vorrichtung nach der Erfindung mit in jeder Stufe jeweils zwei parallelen Rohrreaktoren. Das auch hier durch eine Förderpumpe 1 zugeführte Produkt wird in einer ersten Stufe 21 in zwei Reaktorstränge 22 und 23 verzweigt, die beide zueinander parallel durch die durch den Brenner 5 beheizbare Heizkammer 4 geführt und dort erwärmt werden. Im Unterschied zu dem Ausführungsbeispiel nach Fig. 1 wird hier jedoch die Temperatur der Heizgase mittels des im Rauchgasaustritt 6 messenden Reglers 24 auf einen konstanten Wert geregelt. Regler 25 und 26 regeln jedoch getrennt in beiden Reaktorsträngen 22 und 23 über Ventile 27 und 28 die Strömungsgeschwindigkeit des Produktes. An den durch gestrichelte Pfeile 29 bezeichneten Stellen können Hilfschemikalien in die beiden Reaktorstränge 22 und 23 eindosiert werden. Am Ende beider Reaktorstränge 22 und 23 ist ein gemeinsamer Abscheider 30 angeordnet, aus welchem abgetrennte Sumpfprodukte in den Sumpf 31 abgeschieden werden, während das gasförmige Produkt über eine Rohrleitung 32 und ggf. eine Fördereinrichtung 33 in die nächste Stufe 34 gelangt. Diese Stufe und die darauf folgende Stufe 35 sind im allgemeinen genauso ausgebildet wie die erste Stufe 21.

Auch hier wird das aus der dritten Stufe austretende Produkt einem an sich bekannten Kondensationsverfahren mit einem Kondensator 36 über die Pumpe 37 zugeführt. Eine Vakuumpumpe 38 sorgt für den Unterdruck im System.

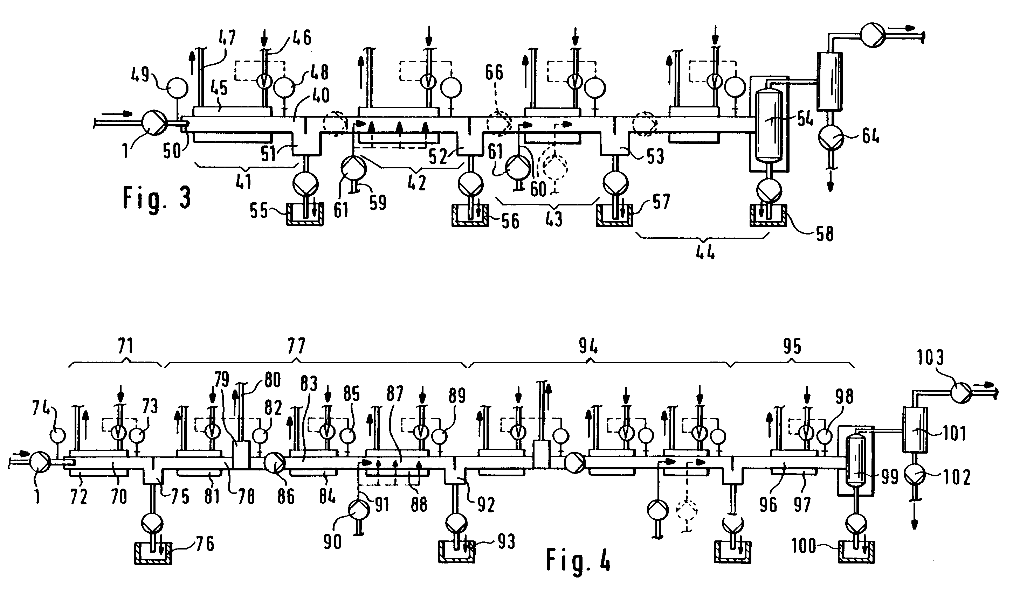

In Fig. 3 ist eine vierstufige Vorrichtung dargestellt, in welcher das Reaktorrohrteil 40 jeder Stufe 41, 42, 43 und 44 mit Abstand je von einem Temperiermantel 45 umgeben ist, wobei der Zwischenraum zwischen jedem Reaktorrohrteil und Mantel 45 je getrennt von einem Heizmedium im Gegenstrom durchströmbar ist, das bei 46 eintritt und bei 47 austritt. Jede Stufe wird durch einen Temperaturregler 48 einzeln auf eine für jede Stufe getrennt festgelegte konstante Temperatur geregelt, während die Strömungsgeschwindigkeit durch einen Regler 49 am Eintritt 50 in den Reaktor geregelt wird. Am Ende jeder Stufe ist je ein Abscheider 51, 52, 53 bzw. 54 für in der jeweiligen Stufe abgetrennte schädliche Bestandteile zum Abscheiden in den jeweils zugeordneten Sumpf 55, 56, 57 bzw. 58 vorgesehen. In dem dargestellten Beispiel sind in der zweiten und dritten Stufe Zuführungen 59 bzw. 60 je mit Dosierpumpen 61 zum Eindosieren von Hilfschemikalien angeordnet. Aus dem Abscheider 54 der letzten Stufe 44 führt eine Rohrleitung 62 zu einem an sich bekannten Kondensator 63 mit Abziehpumpe 64. Eine Vakuumpumpe 65 sorgt auch hier wieder für den erforderlichen Unterdruck im System. In den einzelnen Stufen können ggf. besondere Einrichtungen 66 zur Gasförderung vorgesehen werden.

In dem Ausführungsbeispiel nach Fig. 4 ist ein vierstufiger Rohrreaktor dargestellt mit unterschiedlich ausgebildeten Stufen, deren Temperierung jeweils über ein in Doppelwandrohren geführtes Heizmedium erfolgt, wie im folgenden näher erläutert. Das über eine Förderpumpe 1 dem Rohrreaktor 70 zugeführte aufzubereitende Produkt durchströmt zuerst eine als Reaktor ausgebildete erste Stufe 71, die für das Temperiermedium mit einem Temperiermantel 72 mit Abstand umgeben ist. In dieser durch einen Temperaturregler 73 geregelten Sektion wird das Produkt in eine gasförmige Phase überführt. Die Strömungsgeschwindigkeit wird durch einen Regler 74 exaktest geregelt. Am Ende dieser Stufe 71 ist wiederum ein Abscheider 75 für die in dieser ersten Stufe abgetrennten Schadstoffe in den Sumpf 76 vorgesehen. In der zweiten Stufe 77 ist zunächst eine Sektion 78 für eine Kondensation und anschließendem Flüssigkeitsabscheider 79 angeordnet, aus welchem eine Leitung 80 zu einer nicht dargestellten Vakuumpumpe führt. Die Sektion 78 für die Kondensation ist von einem Temperiermantel 81 umgeben, wobei die Temperatur in diesem Bereich einzeln durch den Regler 82 geregelt ist. Vor der nächsten Sektion 83, in welchem das Produkt wieder in eine gasförmige Phase überführt wird und die von einem Temperiermantel 84 mit Einzelregler 85 umgeben ist, ist eine Förderpumpe 86 vorgesehen. Die nächste und letzte Reaktorsektion 87 dieser Stufe ist mit Temperiermantel 88 mit Einzelregler 89 für die Heiztemperatur umgeben. In diese Reaktorsektion führen an eine Dosierpumpe 90 angeschlossene Leitungen 91 zum Eindosieren von Hilfschemikalien. Am Ende der Stufe 77 ist wieder ein Abscheider 92 mit Sumpf 93 zum Aufnehmen der in dieser Stufe 77 abgetrennten Schadstoffteile. Die nächste Stufe 94 ist im Prinzip genauso aufgebaut wie die Stufe 77, während in diesem Ausführungsbeispiel die letzte Stufe 95 lediglich eine Reaktorsektion 96 mit Temperiermantel 97 und Temperaturregler 98 aufweist. Am Ende des Rohrreaktors ist ein Abscheider 99 vorgesehen, aus welchem nochmals Schadstoffe in einen Sumpf 100 abgeführt werden, während das Produkt über einen Kondensator 101 und Abzugspumpe 102 abgeführt wird. Außerdem sorgt eine Vakuumpumpe 103 für ausreichenden Unterdruck im System.

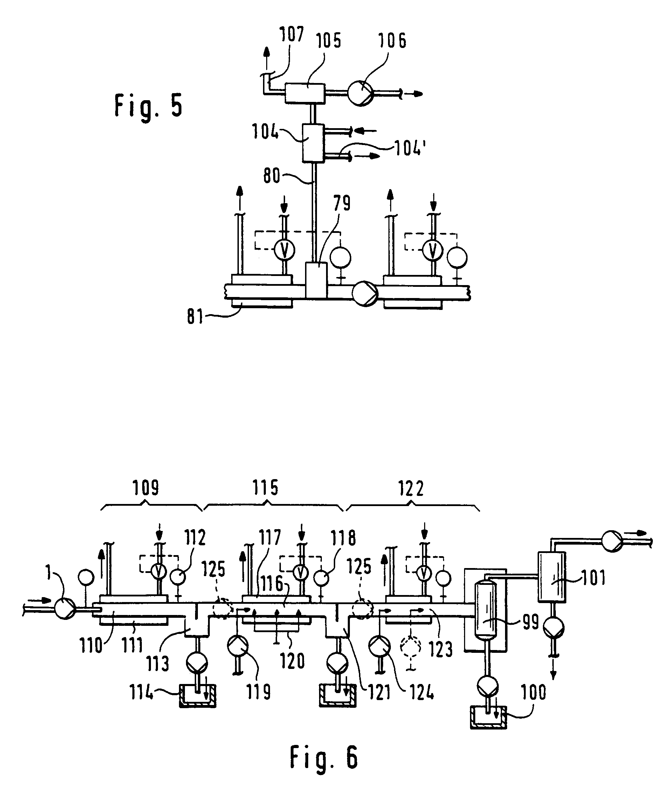

Die Fig. 5 zeigt im Ausschnitt eine Alternativausbildung im Bereich des Abscheiders 79 der Fig. 4. In diesem Falle wird über die Leitung 80 und den Kondensator 104 eine Seitenfraktion für im Endprodukt unerwünschte Gase abgezogen. Über einen Abscheider 105 und Pumpe 106 wird kondensierte Flüssigkeit abgezogen, während die Leitung 107 zu einer nicht dargestellten Vakuumpumpe führt. Diese hier dargestellte Anordnung kann in gleicher Weise an der entsprechenden Stelle in der Stufe 94 der Fig. 4 vorgesehen sein.

In Fig. 6 ist noch ein Ausführungsbeispiel dargestellt für die Hydrierung von entwässertem Altöl. Das durch die Pumpe 1 zugeführte Altöl wird in der ersten Reaktorstufe 109 mit Reaktorrohr 110, Temperiermantel 111 und Temperaturregler 112 in eine gasförmige Phase überführt. Schädliche Bestandteile werden über den Abscheider 113 in den Sumpf 114 abgeführt. In der nächsten Stufe 115 mit dem Reaktorteil 116, Temperiermantel 117 und Temperaturregler 118 wird über eine Dosierpumpe 119 Rotschlamm eindosiert, während über Leitungen 120 H₂ für die Hydrierung eingebracht wird. Weitere schädliche Bestandteile werden über den Abscheider 121 abgeschieden. In der letzten Stufe 122 mit Reaktorrohr 123 wird über die Dosierpumpen 124 Bleicherde zudosiert. Das Reaktorende ist in gleicher Weise wie in dem Beispiel nach Fig. 4 mit Abscheider 99, Sumpf 100, Kondensator 101 und Vakuumpumpe 103 ausgebildet. Mit 125 sind ggf. angeordnete Vorrichtungen zur Gasdruckerhöhung bezeichnet.

Die Erfindung ist ferner an Hand folgender Beispiele näher erläutert:

### Beispiel A:

Bei der Aufarbeitung von chloriertem Altöl werden in der ersten Stufe bei ca 420° C die im Sumpf vorhandenen Additife so reaktiv, daß sich Metallsalze bilden, in welchen ein Teil des Schwefels und des Chlors gebunden sind. Zur Unterstützung dieser Reaktion kann z.B. längs des Rohrreaktors ein Erdalkali Oxydhydrat, z.B. Kalkhydrat, eingespeist werden, das nach der ersten Stufe abgeschieden wird. In der zweiten Stufe wird z.B. bei etwa 310° C Natrium längs des Rohrreaktors so eingespeist, daß eine gesteuerte Raffination des Altöles erfolgt. Der Natriumgehalt richtet sich dabei weitgehend nach dem Chlor-Natrium-Gehalt sowie nach dem gewünschten Raffinationsgrad des Öles. Bei üblichem Altöl kann dieser bei o,4 - 2% liegen. Dabei findet auch die Umwandlung der Chloranteile zu NaCl statt. Nach dieser zweiten Stufe wird das Sumpfprodukt abgeschieden. In der dritten Stufe wird bei ca 340° C Bleicherde zur optischen Aufhellung des Öls eindosiert.

### Beispiel B:

Es wird in der zweiten Stufe ein Hydriervorgang durchgeführt, wobei in dieser Stufe ca 0,5 bis 1 % Bayer-Masse (Rotschlamm) als Katalysator eingemischt werden sowie längs des Reaktors ca. 10 bis 15 % H₂ bezogen auf reaktives Öl.

### Beispiel C:

Es soll eine Vermischung von mineralischen und vegetabilen Altölen getrennt und aufgearbeitet werden, und zwar unter Verwendung einer Vorrichtung nach Fig.1 mit drei Stufen.
In der ersten Stufe 2 wird das Gemisch auf ca 200 bis 250° C erwärmt. In dem Abscheider 8 dieser Stufe wird das vegetabile Öl aus dem Gemisch abgetrennt. In der zweiten Stufe 16 wird die Temperatur des Produktes wenigstens bis 100° C abgekühlt. In den Abscheider 8' dieser zweiten Stufe wird das Mineralöl abgeschieden. In der nächsten Stufe 17 erfolgt eine weitere Abkühlung auf 20 bis 0° C oder weiter herunter und es wird hier der Schadstoff, wie z.B. Acrolein, abgeschieden, das ohne weiteres in der Anlage zu reinem CO₂ verbrannt werden kann. Die Vakuumpumpe 20 sorgt dafür, daß der ganze Prozeß bei einem Unterdruck von ca 3 - 5 mbar durchgeführt wird.

## Patentansprüche

1. Verfahren zum Aufarbeiten schädliche und umweltbelastende Bestandteile enthaltender fließfähiger organischer Abfallstoffe, z.B. Altöle, insbesondere chlorhaltige, unter Verwendung eines durch eine Fürdereinrichtung beschickbaren mehrstufigen Einrohrreaktors, in welchem durch das Rohr ein Energieaustausch, insbesondere thermischer Energie, mit dem Abfallstoff erfolgt, wobei der Abfallstoff wenigstens teilweise in eine gasförmige Phase überführt wird und der Energiefluß und die Zeit, während welcher jedes Molekül des Abfallstoffes diesem Energiefluß ausgesetzt ist, derart geregelt ist, daß sich die für die Abtrennung der schädlichen bzw. umweltbelastenden Bestandteile erforderliche Aktivierungsenergie für eine Bindungslösung zwischen den jeweiligen Molekülen oder Atomen der Bestandteile und den wieder verwertbaren Stoffen einstellt, wobei in jeder Stufe die für das jeweilige Produkt erforderliche und vorher experimentell ermittelte und ggf. geänderte Aktivierungsenergie durch eine in der jeweiligen Stufe geregelte Energieeinwirkung jeweils von neuem eingestellt wird, dadurch gekennzeichnet, daß nach jeder Stufe die in dieser Stufe abgetrennten Schadstoffanteile in einen Sumpf abgeschieden werden.

2. Verfahren nach Anspruch 1, dadurch gekennzeichnet, daß nach der letzten Stufe das gewünschte Produkt wenigstens teilweise kondensiert wird.

3. Verfahren nach Anspruch 1 oder 2, dadurch gekennzeichnet, daß entsprechend dem jeweiligen Produkt und den Prozeßanforderungen längs des Reaktors Hilfschemikalien eindosiert werden.

4. Verfahren nach Anspruch 2 oder 3, dadurch gekennzeichnet, daß nach der letzten Stufe eine fraktionierende Kondensation erfolgt.

5. Verfahren nach einem der Ansprüche 1 bis 4, dadurch gekennzeichnet, daß das in eine gasförmige Phase überführte Produkt wenigstens einmal am Beginn einer folgenden Stufe wieder kondensiert und anschließend erneut in eine gasförmige Phase überführt wird und daß zwischen Kondensierung und anschließender Wiedervergasung eine Abscheidung unerwünschter Gasanteile erfolgt.

6. Verfahren nach Anspruch 5, dadurch gekennzeichnet, daß nach der Kondensation eine Seitenfraktion für im Endprodukt unerwünschte Gase abgezogen wird.

7. Verfahren nach einem der Ansprüche 1 bis 6, dadurch gekennzeichnet, daß bei der Verarbeitung von Altöl der Raffinationsgrad durch Beigaben von Natrium und/oder Veränderung der Aktivierungsenergie und Verweilzeit gesteuert wird.

8. Verfahren nach einem der Ansprüche 1 bis 7, dadurch gekennzeichnet, daß die Regelung der Energieeinwirkung durch Einflußnahme auf die zu- oder abgeführte Energie erfolgt.

9. Verfahren nach einem der Ansprüche 1 bis 7, mit wenigstens zwei parallelen Rohrreaktoren, dadurch gekennzeicnet, daß die Regelung der Energieeinwirkung bei konstantem Energiefluß durch Beeinflussung der Einwirkungsdauer dieses Energieflusses auf das strömende Medium erfolgt.

10. Verfahren nach einem der Ansprüche 1 bis 9, dadurch gekennzeichnet, daß aus einer Stufe ein Hydriervorgang eingeleitet wird.

11. Vorrichtung zur Durchführung des Verfahrens nach einem der Ansprüche 1 bis 10, mit mehreren hintereinander angeordneten Stufen, wobei das Rohr(3,22,23,70,78,83,110 116,123) jeder Stufe (2,16,17,21,34,35,41,42,43,44,71,77,94,95,109,115,122) ein Verhältnis Länge zu Durchmesser von mindestens 200 : 1 bei einem Mindestdurchmesser von 10 mm hat und Regeleinrichtungen zum Regeln der Strömungsgeschwindigkeit (74) und der Temperatur jeder Stufe (82,89,98) vorgesehen sind, dadurch gekennzeichnet, daß nach jeder Stufe ein Abscheider (8,30,51, 52,53,54,75,92,99,113,121) zum Abscheiden der abgetrennten schädlichen Stoffe in einen Sumpf (10,21,55,56,57,58,76,93, 114) angeordnet ist.

12. Vorrichtung nach Anspruch 11, dadurch gekennzeichnet, daß nach der letzten Stufe eine Kondensiervorrichtung (18,36,63, 101) angeordnet ist.

13. Vorrichtung nach Anspruch 11 oder 12, dadurch gekennzeichnet, daß in wenigstens einer Stufe (77,94) ein Zwischenkondensator (78) für das in gasförmiger Phase befindliche Produkt angeordnet ist.

14. Vorrichtung nach einem der Ansprüche 11 bis 13, dadurch gekennzeichnet, daß die einzelnen Reaktorstufen als Doppelwandrohre (45,72,81,84,97,111,117) ausgebildet sind, die je für sich geregelt durch ein Heiz- bzw. Kühlmedium beaufschlagbar sind.

15. Vorrichtung nach einem der Ansprüche 11 bis 14, dadurch gekennzeichnet, daß nach jeder Stufe eine Fördereinrichtung (15,33,66,86,125) vorgesehen ist.

## Claims

1. Process for processing free-flowing organic waste materials containing noxious and environmentally harmful constituents, e.g. spent oils, in particular containing chlorine, using a multi-stage single-tube reactor which can be loaded by a conveyor means and in which energy, in particular heat energy, is exchanged with the waste material through the tube, the waste material being at least partly converted into a gaseous phase and the flow of energy and the time for which each molecule of the waste material is subjected to this flow of energy being regulated so as to establish the activation energy required to break the bond between the respective molecules or atoms of the constituents and the reusable substances in order to remove the noxious or environmentally harmful constituents, the activation energy required for the respective product and determined and possibly modified in advance by way of experiment being re-established in each stage by the application of energy regulated in the respective stage, characterised in that, after each stage, the noxious fractions removed in that stage are separated off into a sump.

2. Process according to claim 1, characterised in that, after the last stage, the desired product is at least partly condensed.

3. Process according to claim 1 or claim 2, characterised in that auxiliary chemicals are supplied along the length of the reactor depending on the respective product and on the process requirements.

4. Process according to claim 2 or claim 3, characterised in that fractionating condensation is effected after the last stage.

5. Process according to one of claims 1 to 4, characterised in that the product converted into a gaseous phase is recondensed at least once at the beginning of a subsequent stage and then is converted back into a gaseous phase and that undesired gaseous fractions are separated off between this condensation and subsequent regasification.

6. Process according to claim 5, characterised in that, after condensation, a side fraction is drawn off for gases undesirable in the end product.

7. Process according to one of claims 1 to 6, characterised in that, when processing spent oil, the degree of refining is controlled by adding sodium and/or by varying the activation energy and residence time.

8. Process according to one of claims 1 to 7, characterised in that the application of energy is regulated by controlling the energy supplied or withdrawn.

9. Process according to one of claims 1 to 7, with at least two parallel tube reactors, characterised in that the application of energy is regulated with a constant flow of energy by controlling the duration of the exposure of the flowing medium to this flow of energy.

10. Process according to one of claims 1 to 9, characterised in that a hydrogenation process is initiated from one stage.

11. Device for carrying out the process according to one of claims 1 to 10, with a plurality of stages arranged one behind the other, in which the tube (3, 22, 23, 70, 78, 83, 110, 116, 123) of each stage (2, 16, 17, 21, 34, 35, 41, 42, 43, 44, 71, 77, 94, 95, 109, 115, 122) has a length to diameter ratio of at least 200 : 1 with a minimum diameter of 10 mm and regulating means are provided for regulating the flow rate (74) and the temperature of each stage (82, 89, 98), characterised in that a separator (8, 30, 51, 52, 53, 54, 75, 92, 99, 113, 121) for separating the noxious constituents removed into a sump (10, 21, 55, 56, 57, 58, 76, 93, 114) is provided after each stage.

12. Device according to claim 11, characterised in that a condensation device (18, 36, 63, 101) is provided after the last stage.

13. Device according to claim 11 or claim 12, characterised in that an intermediate condenser (78) for the product in the gaseous phase is provided in at least one stage (77, 94).

14. Device according to one of claims 11 to 13, characterised in that the individual reactor stages are designed as double-walled tubes (45, 72, 81, 84, 97, 111, 117) which can each be regulated individually and can be acted upon by a heating or cooling medium.

15. Device according to one of claims 11 to 14, characterised in that a conveyor means (15, 33, 66, 86, 125) is provided after each stage.

## Revendications

1. Procédé pour le retraitement de déchets organiques fluides contenant des composants nocifs et polluants, par exemple d'huiles usagées en particulier chlorées, grâce à l'utilisation d'un réacteur monotubulaire à plusieurs étages apte à être alimenté par un dispositif d'alimentation, dans lequel un échange d'énergie, en particulier d'énergie thermique a lieu avec les déchets à travers le tube, étant précisé que les déchets sont transformés au moins partiellement en phase gazeuse et le flux d'énergie et le temps pendant lequel chaque molécule des déchets est exposée à ce flux d'énergie sont réglés pour permettre la mise en place de l'énergie d'activation nécessaire à la séparation des composants nocifs ou polluants, pour une solution de liaison entre les molécules ou atomes des composants et les matières recyclables, étant précisé aussi que dans chaque étage, l'énergie d'activation nécessaire pour le produit calculée au préalable de façon expérimentale et éventuellement modifiée est ré-ajustée grâce à une action d'énergie réglée dans l'étage correspondant, caractérisé en ce que, après chaque étage, les parts de substances nocives séparées dans cet étage sont précipitées dans un bassin de décantation.

2. Procédé selon la revendication 1, caractérisé en ce que, après le dernier étage, le produit souhaité est au moins partiellement condensé.

3. Procédé selon la revendication 1 ou 2, caractérisé en ce que, suivant le produit et les exigences du processus, des produits chimiques additionnels sont introduits de façon dosée le long du réacteur.

4. Procédé selon la revendication 2 ou 3, caractérisé en ce que, après le dernier étage, une condensation de fractionnement a lieu.

5. Procédé selon l'une des revendication 1 à 4, caractérisé en ce que le produit transformé en phase gazeuse est re-condensé au moins une fois au début d'un étage suivant puis transformé à nouveau en phase gazeuse, et en ce qu'il se produit, entre la condensation et la re-gazéification qui suit, une précipitation des parts de gaz indésirables.

6. Procédé selon la revendication 5, caractérisé en ce que, après la condensation, une fraction secondaire est évacuée pour des gaz indésirables dans le produit final.

7. Procédé selon l'une des revendications 1 à 6, caractérisé en ce que, dans le cas du traitement d'huile usagée, le degré de raffinage est commandé par des adjonctions de sodium et/ou par une modification de l'énergie d'activation et du temps de séjour.

8. Procédé selon l'une des revendications 1 à 7, caractérisé en ce qu'on règle l'action d'énergie en influant sur l'énergie amenée ou évacuée.

9. Procédé selon l'une des revendications 1 à 7, avec au moins deux réacteurs tubulaires parallèles, caractérisé en ce qu'on règle l'action d'énergie en présence d'un flux d'énergie constant en influant sur la durée d'action de ce flux sur l'agent s'écoulant.

10. Procédé selon l'une des revendications 1 à 9, caractérisé en ce qu'une opération d'hydrogénation est déclenchée à partir d'un étage.

11. Dispositif pour la mise en oeuvre du procédé selon l'une des revendications 1 à 10, comportant plusieurs étages successifs, étant précisé que le tube (3, 22, 23, 70, 78, 83, 110, 116, 123) de chaque étage (2, 16, 17, 21, 34, 35, 41, 42, 43, 44, 71, 77, 94, 95, 109, 115, 122) a un rapport longueur-diamètre d'au moins 200 : 1 pour un diamètre minimum de 10 mm, et il est prévu des dispositifs de réglage pour le réglage de la vitesse d'écoulement (74) et de la température de chaque étage (82, 89, 98), caractérisé en ce qu'il est prévu, après chaque étage, un séparateur (8, 30, 51, 52, 53, 54, 75, 92, 99, 113, 121) pour précipiter dans un bassin de décantation (10, 21, 55, 56, 57, 58, 76, 93, 114) les substances nocives séparées.

12. Dispositif selon la revendication 11, caractérisé en ce qu'il est prévu, après le dernier étage, un dispositif de condensation (18, 36, 63, 101).

13. Dispositif selon la revendication 11 ou 12, caractérisé en ce qu'il est prévu, dans au moins un étage (77, 94), un condensateur intermédiaire (78) pour le produit en phase gazeuse.

14. Dispositif selon l'une des revendications 11 à 13, caractérisé en ce que les différents étages du réacteur sont conçus comme des tubes à double paroi (45, 72, 81, 84, 97, 111, 117) qui, réglés individuellement, sont aptes à être sollicités par un agent de chauffage ou de refroidissement.

15. Dispositif selon l'une des revendications 11 à 14, caractérisé en ce qu'il est prévu, après chaque étage, un dispositif d'alimentation (15, 33, 66, 86, 125).
